**Europäisches Patentamt**

**European Patent Office**

**Office européen des brevets**

(11) Veröffentlichungsnummer: **0 261 436 B1**

(12) **EUROPÄISCHE PATENTSCHRIFT**

(45) Veröffentlichungstag der Patentschrift: **04.12.91**

(51) Int. Cl.⁵: **G01F 1/84**

(21) Anmeldenummer: **87112470.7**

(22) Anmeldetag: **27.08.87**

(54) **Nach dem Coriolisprinzip arbeitendes Massendurchflussmessgerät.**

(30) Priorität: **26.09.86 DE 3632851**

(43) Veröffentlichungstag der Anmeldung:
**30.03.88 Patentblatt 88/13**

(45) Bekanntmachung des Hinweises auf die
Patenterteilung:
**04.12.91 Patentblatt 91/49**

(84) Benannte Vertragsstaaten:
**CH DE FR GB IT LI NL**

(56) Entgegenhaltungen:
**EP-A- 0 119 638**
**DE-A- 2 404 356**
**GB-A- 2 171 200**
**NL-A- 7 401 104**

(73) Patentinhaber: **FLOWTEC AG**
**Kägenstrasse 4**
**CH-4153 Reinach BL 1(CH)**

(72) Erfinder: **Flecken, Peter**
**Kirchstrasse 8**
**W-7858 Weil-Haltingen(DE)**
Erfinder: **Abildgaard, Niels**
**Fischersgade 42**
**DK-9630 Logstor(DK)**

(74) Vertreter: **Schwepfinger, Karl-Heinz, Dipl.-Ing.**
**Prinz, Leiser, Bunke & Partner Manzingerweg**
**7**
**W-8000 München 60(DE)**

Rank Xerox (UK) Business Services

## Beschreibung

Die Erfindung betrifft ein nach dem Coriolisprinzip arbeitendes Massendurchflußmeßgerät mit einem feststehenden Trägerrohr, einem axial im Trägerrohr angeordneten mechanischen Schwingsystem mit wenigstens einem an beiden Enden eingespannten geraden Meßrohr, einem Schwingungserreger, der das bzw. jedes Meßrohr in der Mitte in Biegeschwingungen versetzt, und mit Schwingungssensoren zur Abtastung der mechanischen Schwingungen in gleichen Abständen zu beiden Seiten des Schwingungserregers.

Bei den nach dem Coriolisprinzip arbeitenden Massendurchflußmeßgeräten dieser Art, die beispielsweise aus der EP-A-0 119 638 bekannt sind, beruht die Massendurchflußmessung bekanntlich darauf, daß das durch die schwingenden geraden Meßrohre strömende Meßmedium Corioliskräfte erzeugt, die eine gegenseitige Phasenverschiebung der mechanischen Schwingungen an den beiden Enden jedes Meßrohres zur Folge haben. Die Größe dieser Phasenverschiebung ist ein Maß für den Massendurchfluß. Die Phasenverschiebung wird mit Hilfe der beiden Schwingungssensoren gemessen, die die von ihnen abgetasteten Schwingungen in elektrische Sensorsignale umsetzen, die für die Phasenlage der Schwingungen kennzeichnend sind. Es besteht jedoch das Problem, daß das an beiden Enden eingespannte mechanische Schwingsystem Schwingungsenergie auf das Trägerrohr und auf die angeschlossenen Rohrleitungen überträgt. Ferner entstehen temperaturbedingte mechanische Spannungen, wenn die Meßrohre eine andere Temperatur als das Trägerrohr haben, wie es insbesondere bei der Messung des Massendurchflusses von Meßmedien der Fall ist, deren Temperatur von der Umgebungstemperatur verschieden ist. Derartige temperaturbedingte Spannungen verändern das Schwingverhalten des mechanischen Schwingsystems, so daß eine Kompensation oder Korrektur erforderlich ist, damit Meßfehler vermieden werden.

Aus der DE-A-24 04 356 ist andererseits ein nach dem Coriolisprinzip arbeitendes Massendurchflußmeßgerät bekannt, bei dem das axial in einem Trägerrohr angeordnete Meßrohr an beiden Enden durch flexible Verbindungsstücke mit Ein- und Auslaßstutzen verbunden ist. Bei diesem Massendurchflußmeßgerät beruht die Massendurchflußmessung jedoch auf einem anderen Prinzip, das voraussetzt, daß die Enden des Meßrohres nicht fest eingespannt sind, sondern gegenüber dem Trägerrohr und gegenüber den Ein- und Auslaßstutzen frei beweglich sind. Diese freie Beweglichkeit wird durch die flexiblen Verbindungsstücke ermöglicht, die beispielsweise als flexible Balgen ausgebildet sind. Infolgedessen bestehen bei diesem Massendurchflußmeßgerät auch nicht die zuvor geschilderten Probleme, die durch die feste Einspannung verursacht werden.

Aufgabe der Erfindung ist demgegenüber die Schaffung eines nach dem Coriolisprinzip arbeitenden Massendurchflußmeßgeräts der eingangs angegebenen Art, bei welchem das mechanische Schwingsystem vom Trägerrohr mechanisch gut entkoppelt ist und temperaturbedingte mechanische Spannungen verringert sind, jedoch die für die Erzeugung der Biegeschwingungen erforderliche Einspannung der Enden des Meßrohres gewährleistet ist.

Nach der Erfindung wird diese Aufgabe dadurch gelöst, daß das mechanische Schwingsystem an jedem Ende durch eine ringförmige Membran, deren Außenrand mit dem Ende des Trägerrohres und deren Innenrand mit dem mechanischen Schwingsystem verbunden ist, im Trägerrohr frei aufgehängt ist.

Bei dem Massendurchflußmeßgerät nach der Erfindung ist das mechanische Schwingsystem ausschließlich durch die an den beiden Enden angeordneten ringförmigen Membranen mit dem Trägerrohr verbunden. Diese Membranen bewirken eine gute mechanische Entkopplung des Schwingsystems von dem Trägerrohr und den angeschlossenen Rohrleitungen. Ferner können die Membranen Unterschiede in den temperaturbedingten Längenänderungen von Trägerrohr und mechanischem Schwingsystem ausgleichen.

Eine weitere wesentliche Verbesserung eines nach dem Coriolisprinzip arbeitenden Massendurchflußmeßgeräts wird nach der Erfindung dadurch erhalten, daß zumindest das bzw. jedes Meßrohr des Schwingsystems, vorzugsweise aber das ganze Schwingsystem einschließlich der beiden Membranen und eventuell vorhandener Verteilerstücke aus Titan besteht. Bei allen nach dem Coriolisprinzip arbeitenden Massendurchflußmeßgeräten mit geraden schwingenden Meßrohren besteht nämlich das folgende Problem: Damit ein ausreichend großes Meßsignal erhalten wird, muß am Ort der Schwingungssensoren eine entsprechend große Schwingungsamplitude vorhanden sein. Die Schwingungsamplitude ist um so größer, je länger die Meßrohre sind. Andererseits ist aber die Eigenresonanzfrequenz des Schwingsystems um so niedriger, je länger die Meßrohre sind. Da das Schwingsystem zu Eigenresonanzschwingungen angeregt wird, ist die Eigenresonanzfrequenz des Schwingsystems die Betriebsfrequenz. Je niedriger die Betriebsfrequenz ist, desto stärker treten unkontrollierbare Störschwingungen auf, die sich dem Meßsignal überlagern. Deshalb wäre eine möglichst hohe Betriebsfrequenz des Massendurchflußmeßgeräts erwünscht.

Wenn die Meßrohre oder vorzugsweise das ganze Schwingsystem aus Titan bestehen, können Meßsignale ausreichender Größe mit wesentlich kürzeren Meßrohren als bei einem Schwingsystem aus Stahl erhalten werden. Die Eigenresonanzfrequenz eines solchen Schwingsystems aus Titan liegt daher wesentlich höher als die Eigenresonanzfrequenz eines Schwingsystems aus Stahl, das Meßsignale gleicher Größe liefert. Bei der höheren Betriebsfrequenz des Massendurchflußmeßgeräts mit einem Schwingsystem aus Titan sind unerwünschte Störschwingungen praktisch beseitigt. Außerdem ist natürlich eine kürzere Baulänge des Massendurchflußmeßgeräts auch aus konstruktiven Gründen sehr vorteilhaft.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung von Ausführungsbeispielen, die in der Zeichnung dargestellt sind. In der Zeichnung zeigt:

Fig. 1    eine zum Teil geschnittene Seitenansicht eines nach dem Coriolisprinzip arbeitenden Massendurchflußmeßgeräts gemäß einer ersten Ausführungsform der Erfindung,

Fig. 2    eine Querschnittsansicht des Massendurchflußmeßgeräts von Fig. 1 entlang der Schnittlinie A-B,

Fig. 3    eine zum Teil geschnittene Seitenansicht eines nach dem Coriolisprinzip arbeitenden Massendurchflußmeßgeräts gemäß einer zweiten Ausführungsform der Erfindung und

Fig. 4    eine Seitenansicht der beiden Endabschnitte des Schwingsystems des Massendurchflußmeßgeräts von Fig. 3, wobei der eine Endabschnitt geschnitten dargestellt ist.

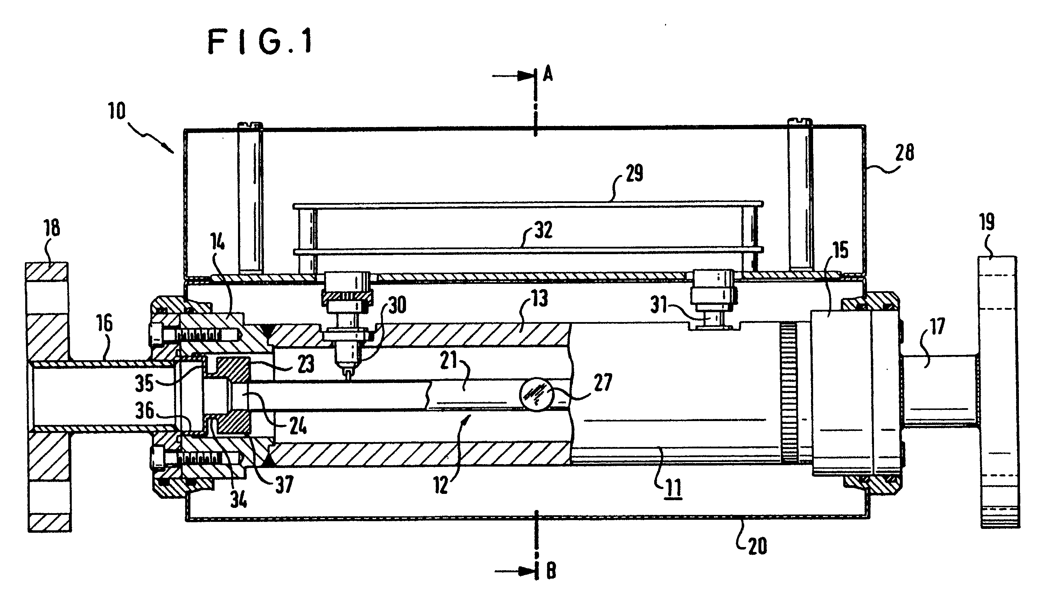

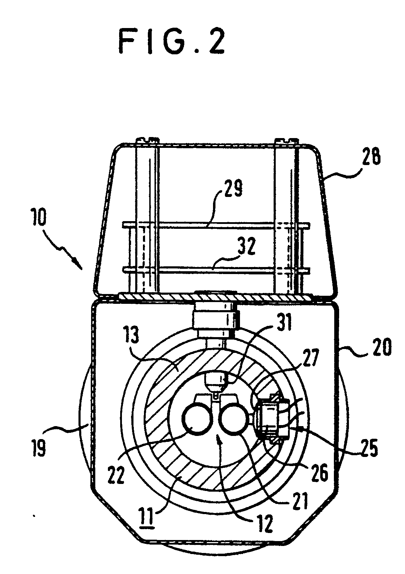

Das in Fig. 1 in einer teilweise geschnittenen Seitenansicht und in Fig. 2 im Querschnitt längs der Linie A-B von Fig. 1 dargestellte Massendurchflußmeßgerät 10 weist ein massives Trägerrohr 11 auf, in dessen Innerem ein mechanisches Schwingsystem 12 angeordnet ist. Das Trägerrohr 11 besteht aus einem Rohrabschnitt 13, der an jedem Ende mit einer Endbuchse 14 bzw. 15 verschweißt ist. An jeder Endbuchse ist ein Anschlußstutzen 16 bzw. 17 angeschraubt, der einen Flansch 18 bzw. 19 trägt. Mittels der Flansche 18 und 19 kann das Massendurchflußmeßgerät in eine Rohrleitung eingefügt werden, durch die das Meßmedium strömt, dessen Massendurchfluß gemessen werden soll. Das Trägerrohr 11 ist von einem Blechgehäuse 20 umgeben.

Das mechanische Schwingsystem 12 besteht aus zwei parallelen Meßrohren 21 und 22, die an beiden Enden jeweils durch ein Verteilerstück so miteinander verbunden sind, daß sie strömungstechnisch parallelgeschaltet sind. Die Meßrohre 21 und 22 erstrecken sich über die ganze Länge des Rohrabschnitts 13, und die Verteilerstücke liegen im Innern der Endbuchsen 14 und 15. Die beiden Verteilerstücke sind völlig gleich ausgebildet und angeordnet, doch ist in der Teilschnittansicht von Fig. 1 nur das im Innern der Endbuchse 14 liegende Verteilerstück 23 zu sehen. Die folgende Beschreibung des Verteilerstücks 23 gilt jedoch in gleicher Weise auch für das am anderen Ende des Schwingsystems angeordnete Verteilerstück.

Das Verteilerstück 23 ist eine massive kreisrunde Scheibe beträchtlicher Dicke, die im Innern Strömungskanäle 24 enthält, die die durch den Anschlußstutzen 16 kommende Strömung gleichmäßig auf die beiden Meßrohre 21 und 22 aufteilen. In entsprechender Wiese vereinigt das am anderen Ende angebrachte Verteilerstück die Strömung der beiden Meßrohre, so daß die vereinigte Strömung durch den Anschlußstutzen 17 abfließt. Natürlich kann die Strömungsrichtung auch umgekehrt sein.

In der Mitte des Trägerrohres 11 ist ein Schwingungserreger 25 (Fig. 2) angeordnet, der die beiden Meßrohre 21, 22 in gegensinnige Biegeschwingungen versetzen kann, deren Schwingungsebene in der gemeinsamen Ebene der beiden Meßrohre liegt, also senkrecht zur Zeichenebene von Fig. 1 steht. Der Schwingungserzeuger 25 besteht aus einem in der Wand des Rohrabschnitts 13 befestigten Elektromagnet 26, dem ein am Meßrohr 21 befestigter Anker 27 gegenüberliegt. Wenn durch die Spule des Elektromagnets 26 ein Wechselstrom geschickt wird, wird durch die wechselnden Anziehungskräfte zwischen dem Elektromagnet 26 und dem Anker 27 das Meßrohr 21 in Biegeschwingungen versetzt, die über die Verteilerstücke 23 auf das Meßrohr 22 übergekoppelt werden, so daß schließlich die beiden Meßrohre 21 und 22 gegenphasige Biegeschwingungen ausführen. Der Erregungswechselstrom kommt von einer elektronischen Erregerschaltung, die in einem auf dem Blechgehäuse 20 befestigten Schaltungsgehäuse 28 untergebracht und nur durch ihre Schaltungsplatine 29 angedeutet ist. Die Erregungsschaltung ist so ausgebildet, daß das Schwingsystem 12 zu Eigenresonanzschwingungen angeregt wird.

Die Messung des Massendurchflusses beruht bei einem solchen Massendurchflußmesser darauf, daß das durch die schwingenden Meßrohre 21 und 22 strömende Meßmedium Corioliskräfte erzeugt, die eine gegenseitige Phasenverschiebung der mechanischen Schwingungen an den beiden Enden jedes Meßrohres zur Folge haben. Die Größe dieser Phasenverschiebung ist ein Maß für den Massendurchfluß. Zur Messung der Phasenverschiebung sind zu beiden Seiten des Schwingungserregers 25 und in gleichen Abständen von diesem zwei Schwingungssensoren 30 und 31 angebracht. Die Schwingungssensoren 30 und 31 tasten die mechanischen Schwingungen der Meßrohre 21 und 22 ab und setzen diese in elektrische Sensorsignale um, die für die Phasenlage der abgetasteten Schwingungen kennzeichnend sind. Diese Sensorsignale werden einer elektronischen Auswerteschaltung zugeführt, die gleichfalls im Schaltungsgehäuse 28 untergebracht und nur durch ihre Schaltungsplatine 32 angedeutet ist. Die Auswerteschaltung ermittelt den Massendurchfluß aus der Phasendifferenz der ihr zugeführten Sensorsignale.

Die Besonderheit des dargestellten Massendurchflußmeßgeräts besteht in der Aufhängung des mechanischen Schwingsystems 12 im Trägerrohr 11. An das Verteilerstück 23 ist ein kurzer rohrförmiger Ansatz 34 angeformt, der mit dem Innenrand einer ringförmigen Membran 35 verbunden ist. Der Außenrand der Membran 35 ist mit einem Haltering 36 verbunden, der in der Endbuchse 14 eingespannt und axial gegen die etwas nach innen vorspringende Stirnfläche des Anschlußstutzens 16 abgestützt ist. Somit ist das Schwingsystem 12 mittels der Membran 35 und der entsprechenden, am anderen Ende angeordneten Membran axial im Trägerrohr 11 aufgehängt. Das Verteilerstück 23 hat kleinere Querschnittsabmessungen als der Hohlraum im Innern der Endbuchse 14, so daß rings um das Verteilerstück zwischen dessen Umfangsfläche und der Innenfläche der Endbuchse 14 ein Zwischenraum 37 besteht. Der einzige Kontakt zwischen dem Schwingsystem 12 und dem Trägerrohr 11 besteht somit über die an den beiden Enden angebrachten Membranen 35.

Der rohrförmige Ansatz 34, die Membran 35 und der Haltering 36 können in einem Stück mit dem Verteilerstück 23 gefertigt sein. Die Membran 35 ist dann einfach eine dünne Wand aus dem Material des Verteilerstücks 23, deren Dicke so gering ist, daß sich die Membran unter Belastung elastisch verformen kann. Natürlich könnte die Membran auch ein getrennt hergestelltes Teil sein, das am Außenrand mit einem getrennten Haltering und am Innenrand mit dem Verbindungsstück auf geeignete Weise dicht verbunden wird, z.B. durch Verschweißen. Auf jeden Fall ist diese Baugruppe so gestaltet, daß einerseits die Überkopplung von dem einen Meßrohr auf das andere Meßrohr durch das massive Verteilerstück möglichst hart, die Ankopplung des Schwingsystems an das Außenrohr durch die Membran jedoch möglichst weich ist. Die Membranaufhängung des Schwingsystems 12 ergibt daher eine ausgezeichnete Entkopplung der mechanischen Biegeschwingungen von dem Trägerrohr 11 und von den Anschlußstutzen 16. Ferner werden unterschiedliche Wärmeausdehnungen der Meßrohre 21, 22 und des Trägerrohres 11 von der Membran 35 ausgeglichen, da sich diese unter einer axialen Belastung elastisch verformen kann. Die hierzu erforderliche Axialbewegung des Verbindungsstücks 23 ist infolge des Zwischenraums 37 ungehindert möglich.

Bei der in Fig. 1 dargestellten Ausführungsform ist die ringförmige Membran 35 eben und senkrecht zur Strömungsrichtung des Meßmediums angeordnet. Diese Anordnung ergibt die optimale Membranwirkung, aber ungünstige Strömungsverhältnisse, da die Membran 35 ein senkrecht in den Strömungsquerschnitt vorspringendes Hindernis bildet. Dadurch ergibt sich an der Eintrittsseite des Massendurchflußmeßgeräts eine plötzliche Verengung und an der Austrittsseite eine plötzliche Erweiterung des Strömungsquerschnitts.

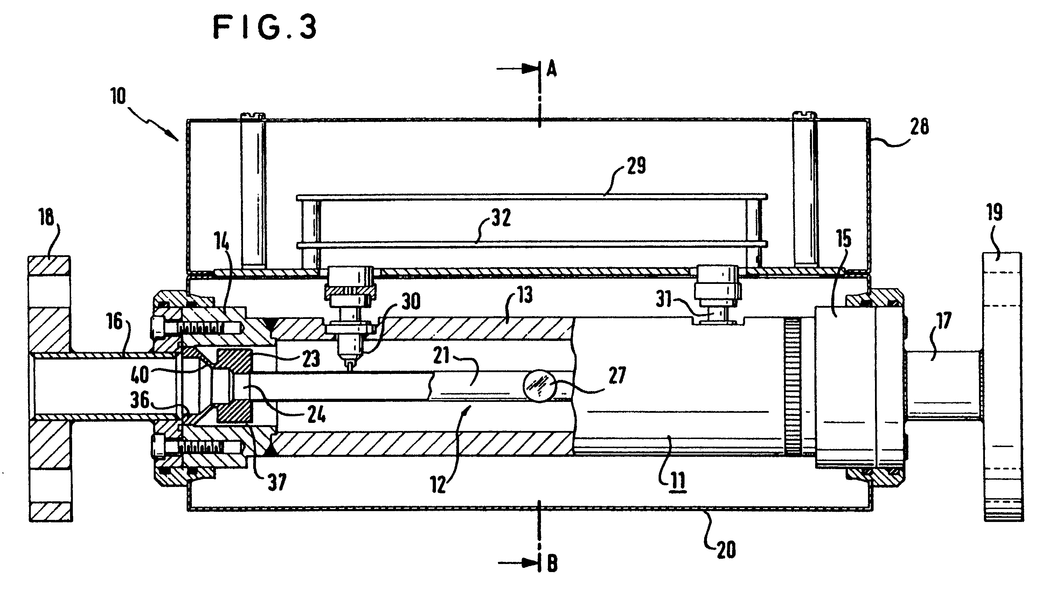

In Fig. 3 ist eine abgeänderte Ausführungsform des Massendurchflußmeßgeräts dargestellt, die sich von derjenigen von Fig. 1 nur durch eine andere Form der Membran unterscheidet. Alle anderen Bestandteile sind unverändert; sie sind daher mit den gleichen Bezugszeichen wie in Fig. 1 bezeichnet und werden nicht nochmals beschrieben. Desgleichen gilt die Querschnittsansicht von Fig. 2 auch für das Massendurchflußmeßgerät von Fig. 3.

Die ringförmige Membran 40 ist bei der Ausführungsform von Fig. 3 nicht eben, sondern konisch, so daß sie vom Haltering 36 zum Verbindungsstück 23 hin schräg nach innen verläuft. Dadurch ergibt sich an der Eintrittsseite eine allmähliche Verringerung des Strömungsquerschnitts und an der Austrittsseite eine entsprechende allmähliche Erweiterung des Strömungsquerschnitts, wodurch die Strömungsbedingungen gegenüber der Ausführungsform von Fig. 1 wesentlich verbessert werden.

Durch die konische Form ist die Membran 40 bei der Ausführungsform von Fig. 3 wesentlich steifer als die ebene Membran 35 von Fig. 1, doch sind die von der Membran auszugleichenden Relativbewegungen zwischen dem Schwingsystem 12 und dem Trägerrohr 11 so gering, daß auch im Fall von Fig. 3 noch eine gute Entkopplung der Schwingbewegungen vom Trägerrohr und vom Rohrleitungssystem erhalten wird.

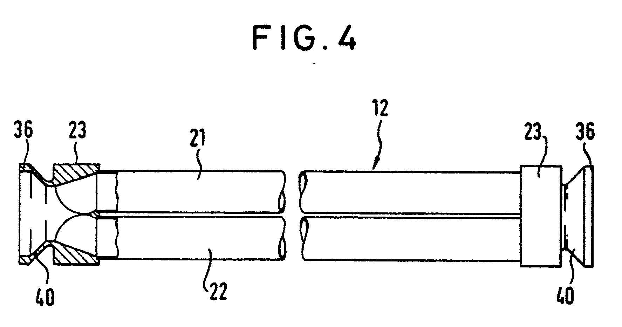

Wie bei der Ausführungsform von Fig. 1 kann auch bei der Ausführungsform von Fig. 3 die Membran in einem Stück mit dem Verteilerstück 23 und dem Haltering 36 geformt sein. Fig. 4 zeigt die Endabschnitte des Schwingsystems 12 von Fig. 3 mit den beiden Verteilerstücken 23, den Membranen 40 und den Halteringen 36 in einer Seitenansicht, die im rechten Winkel zu der Schnittansicht von Fig. 3 gesehen ist, so daß die Endabschnitte der beiden parallelen geraden Meßrohre 21, 22 zu erkennen sind. Diese Darstellung verdeutlicht auch die identische Gestaltung der beiden Endabschnitte des Schwingsystems.

Die beschriebene Membranaufhängung des Schwingsystems eines Massendurchflußmeßgeräts ist nicht auf den Fall beschränkt, daß das Schwingsystem zwei parallele gerade Meßrohre enthält. Sie eignet sich auch für Massendurchflußmesser, deren Schwingsystem mehr als zwei parallele gerade Meßrohre aufweist, die durch Verteilerstücke strömungstechnisch parallelgeschaltet sind, sowie auch für Massendurchflußmesser, deren Schwingsystem nur ein gerades Meßrohr enthält, wobei in diesem Fall das einzige Meßrohr ohne Zwischenschaltung eines Verteilerstücks unmittelbar mit der Membran verbunden ist.

Eine weitere wesentliche Verbesserung solcher Massendurchflußmeßgeräte wird erhalten, wenn zumindest jedes Meßrohr, vorzugsweise aber das gesamte mechanische Schwingsystem einschließlich der Verteilerstücke und der Membranen aus Titan besteht. Dadurch können eine Reihe von Einschränkungen und Nachteilen beseitigt werden, die bei derartigen Massendurchflußmessern mit Schwingsystemen aus Stahl bestehen.

Insbesondere können bei Verwendung eines Schwingsystems aus Titan Meßsignale ausreichender Größe mit wesentlich kürzeren Meßrohren als bei Verwendung eines Schwingsystems aus Stahl erhalten werden. Dadurch ergibt sich der Vorteil einer höheren Eigenresonanzfrequenz des Schwingsystems, denn die Eigenresonanzfrequenz ist um so höher, je kürzer die Meßrohre sind. Da das mechanische Schwingsystem zu Eigenresonanzschwingungen angeregt wird, kann ein Schwingsystem aus Titan bei einer wesentlich höheren Frequenz betrieben werden als ein Schwingsystem aus Stahl, das Meßsignale gleicher Größe liefert. Während ein Massendurchflußmesser der in der Zeichnung dargestellten Art mit Meßrohren aus Stahl bei einer Frequenz betrieben werden muß, die in der Größenordnung von etwa 100 bis 200 Hz liegt, kann ein gleichartiges Massendurchflußmeßgerät mit Meßrohren aus Titan, das bei entsprechend verringerter Baulänge Meßsignale gleicher Größe liefert, mit einer wesentlich höheren Frequenz betrieben werden, die in der Größenordnung von 1000 Hz liegt. Bei einer so hohen Betriebsfrequenz werden unerwünschte mechanische Störschwingungen vernachlässigbar. Solche Störschwingungen treten um so stärker in Erscheinung, je niedriger die Betriebsfrequenz ist. Sie überlagern sich dem Meßsignal und verfälschen das Meßergebnis.

Diese vorteilhaften Eigenschaften von Schwingsystemen aus Titan ergeben sich aus der Tatsache, daß Titan die optimale Kombination von spezifischem Gewicht und Elastizitätsmodul für diesen Anwendungszweck aufweist. Darüber hinaus hat Titan einen günstigen Wärmeausdehnungskoeffizient, so daß ein Massendurchflußgerät mit einem Schwingsystem aus Titan und einem Trägerrohr aus Stahl für Messungen in einem großen Temperaturbereich geeignet ist. Schließlich ist Titan sehr korrosionsbeständig, so daß sich ein solches Massendurchflußgerät auch für die Messung von chemisch aggressiven Meßmedien eignet.

**Patentansprüche**

1. Nach dem Coriolisprinzip arbeitendes Massendurchflußmeßgerät mit einem feststehenden Trägerrohr (13), einem axial im Trägerrohr (13) angeordneten mechanischen Schwingsystem (12) mit wenigstens einem an beiden Enden eingespannten geraden Meßrohr (21, 22), einem Schwingungserreger (25), der das bzw. jedes Meßrohr (21, 22) in der Mitte in Biegeschwingungen versetzt, und mit Schwingungssensoren (30, 31) zur Abtastung der mechanischen Schwingungen in gleichen Abständen zu beiden Seiten des Schwingungserregers (25), **dadurch gekennzeichnet,** daß das mechanische Schwingsystem (12) an jedem Ende durch eine ringförmige Membran (35; 40), deren Außenrand mit dem Ende des Trägerrohres (13) und deren Innenrand mit dem mechanischen Schwingsystem (12) verbunden ist, im Trägerrohr (13) frei aufgehängt ist.

2. Massendurchflußmeßgerät nach Anspruch 1, **dadurch gekennzeichnet,** daß der Außenrand jeder Membran (35; 40) am Trägerrohr (13) eingespannt ist.

3. Massendurchflußmeßgerät nach Anspruch 1, **dadurch gekennzeichnet,** daß der Außenrand jeder Membran (35; 40) mit einem im Trägerrrohr (13) eingespannten Haltering (36) verbunden ist.

4. Massendurchflußmeßgerät nach einem der Ansprüche 1 bis 3, **dadurch gekennzeichnet,** daß das mechanische Schwingsystem (12) wenigstens zwei parallele Meßrohre (21, 22) enthält, die an jedem Ende durch ein Verteilerstück (23) strömungstechnisch parallelgeschaltet sind, und daß der Innenrand jeder Membran (35; 40) mit dem am gleichen Ende angeordneten Verteilerstück (23) verbunden ist.

5. Massendurchflußmeßgerät nach Anspruch 4, **dadurch gekennzeichnet,** daß jede Membran (35; 40) einstückig mit dem zugehörigen Verteilerstück (23) ausgebildet ist.

6. Massendurchflußmeßgerät nach einem der Ansprüche 1 bis 5, **dadurch gekennzeichnet,** daß jede Membran (35) eben ist.

7. Massendurchflußmeßgerät nach einem der Ansprüche 1 bis 5, **dadurch gekennzeichnet,** daß jede Membran (40) konisch ausgebildet ist.

8. Massendurchflußmeßgerät nach einem der vorhergehenden Ansprüche, **dadurch gekennzeichnet,** daß das bzw. jedes Meßrohr (21, 22) aus Titan besteht.

9. Massendurchflußmeßgerät nach Anspruch 8, **dadurch gekennzeichnet,** daß das ganze mechanische Schwingsystem (12) einschließlich der Membranen (35; 40) sowie gegebenenfalls der Verteilerstücke (23) aus Titan besteht.

## Claims

1. Mass flow meter operating by the Coriolis principle and comprising a stationary support tube (13), a mechanical oscillating system (12) disposed axially in the support tube (13) and comprising at least one straight measuring tube (21, 22) clamped at both ends, an oscillation exciter (25) which sets the or each measuring tube (21, 22) in the centre in flexural oscillations and oscillation sensors (30, 31) for sensing the mechanical oscillations at equal distances on both sides of the oscillation exciter (25), characterized in that the mechanical oscillating system (12) is freely suspended in the support tube (13) at each end by an annular diaphragm (35; 40), the outer edge of which is connected to the end of the support tube (13) and the inner edge of which is connected to the mechanical oscillating system (12).

2. Mass flow meter according to claim 1, characterized in that the outer edge of each diaphragm (35; 40) is clamped in the support tube (13).

3. Mass flow meter according to claim 1, characterized in that the outer edge of each diaphragm (35; 40) is connected to a holder ring (36) clamped in the support tube (13).

4. Mass flow meter according to any one of claims 1 to 3, characterized in that the mechanical oscillating system (12) comprises at least two parallel measuring tubes (21, 22), which at each end are connected in parallel fluidically by a distributing member (23) and that the inner edge of each diaphragm (35; 40) is connected to the distributing member (23) disposed at the same end.

5. Mass flow meter according to claim 4, characterized in that each diaphragm (35; 40) is made integrally with the associated distributing member (23).

6. Mass flow meter according to any one of claims 1 to 5, characterized in that each diaphragm (35) is planar.

7. Mass flow meter according to any one of claims 1 to 5, characterized in that each diaphragm (40) is made conical.

8. Mass flow meter according to any one of the preceding claims, characterized in that the or each measuring tube (21, 22) consists of titanium.

9. Mass flow meter according to claim 8, characterized in that the entire mechanical oscillating system (12) including the diaphragms (35; 40) and possibly the distributing members (23) consists of titanium.

## Revendications

1. Débitmètre massique fonctionnant suivant le principe de Coriolis, comprenant un tube porteur fixe (13), un système oscillant mécanique (12) disposé axialement dans le tube porteur (13) et comprenant au moins un tube de mesure rectiligne (21, 22) fixé aux deux extrémités, un excitateur vibratoire (25), qui produit des vibrations de flexion au milieu du ou de chaque tube de mesure (21, 22), et des détecteurs de vibration (30, 31) pour détecter les vibrations mécaniques à égale distance des deux côtés de l'excitateur vibratoire (25), caractérisé en ce que le système oscillant mécanique (12) est suspendu librement dans le tube porteur (13) à chaque extrémité au moyen d'une membrane annulaire (35; 40) dont le bord extérieur est relié à l'extrémité du tube porteur (13) et dont le bord intérieur est relié au système oscillant mécanique (12).

2. Débitmètre massique conforme à la revendication 1, caractérisé en ce que le bord extérieur de chaque membrane (35; 40) est encastré dans le tube porteur (13).

3. Débitmètre massique conforme à la revendication 1, caractérisé en ce que le bord extérieur de chaque membrane (35; 40) est solidaire d'un anneau de retenue (36) fixé dans le tube porteur (13).

4. Débitmètre massique conforme à l'une des revendications 1 à 3, caractérisé en ce que le système oscillant mécanique (12) comprend au moins deux tubes de mesure (21, 22) parallèles qui, du point de vue de la technique des fluides, sont branchés en parallèle à chaque extrémité au moyen d'une pièce distributrice (23), et en ce que le bord intérieur de chaque membrane (35; 40) est relié à la pièce distributrice (23) située à la même extrémité.

5. Débitmètre massique conforme à la revendication 4, caractérisé en ce que chaque membrane (35; 40) est formée d'un seul tenant avec la pièce distributrice (23) associée.

6. Débitmètre massique conforme à l'une des revendications 1 à 5, caractérisé en ce que chaque membrane (35) est plane.

7. Débitmètre massique conforme à l'une des revendications 1 à 5, caractérisé en ce que chaque membrane (40) est réalisée en forme de cône.

8. Débitmètre massique conforme à l'une des revendications précédentes, caractérisé en ce que le ou respectivement chaque tube de mesure (21, 22) est en titane.

9. Débitmètre massique conforme à la revendication 8, caractérisé en ce que le système oscillant mécanique (12) en entier, y compris les membranes (35; 40) ainsi que la cas échéant les pièces distributrices (23), est en titane.

FIG.1

EP 0 261 436 B1

# F I G . 2

FIG.3

EP 0 261 436 B1

# FIG.4